# EUROPEAN PATENT SPECIFICATION

(11) **EP 2 127 529 B1**
(45) Date of publication and mention of the grant of the patent: **09.03.2011**
(21) Application number: 08702807.2
(22) Date of filing: 23.01.2008
(51) Int. Cl.: A21D 13/08, A23G 3/50, A23L 1/30, A23G 3/48

(54) **CONFECTIONARY CONTAINING CATECHINS**
KATECHINE ENTHALTENDE KONDITORWAREN
CONFISERIE CONTENANT DES CATECHINES

(30) Priority: 24.01.2007 JP 2007014289; 24.01.2007 JP 2007014292
(43) Date of publication of application: 02.12.2009
(73) Proprietor: Kao Corporation, Chuo-Ku Tokyo 103-8210 (JP)
(72) Inventor: KAMEO, Yoji, Tokyo 131-8501 (JP); TSUCHIDA, Mayuko, Tokyo 131-8501 (JP)
(74) Representative: HOFFMANN EITLE
(86) International application number: PCT/JP2008/000066
(87) International publication number: WO 2008/090740

(56) References cited:
- EP-A1- 0 423 419
- JP-A- 2000 295 972
- JP-A- 2001 309 763
- JP-A- 2001 309 763
- JP-A- 2003 299 440
- JP-A- 2003 299 440
- JP-A- 2005 229 974
- JP-A- 2006 174 755
- JP-A- 2007 001 893
- JP-A- 2007 262 400
- US-A1- 2003 096 050

## Description

### Field of the Invention

This invention relates to a confectionery with catechins added therein.

### Background of the Invention

Catechins are known to have physiological effects such as α-amylase activity inhibiting effect and cholesterol absorption inhibiting effect, in addition to the widely-known function as an antioxidant (Patent Documents 1 and 2), and their addition to various foods has been under research in recent years. As such catechins, those obtained from plants such as tea, grapes, apples and soybeans are widely used as they are to be added to foods.

Concerning cakes such as a sponge cake, butter cake, chiffon cake, rolled cake, Swiss roll, bouchees, tree cake (Baumkuchen), pound cake, cheese cake and steamed cakes and baked confectioneries such as cookies, biscuits, and calorie bars, there is an outstanding desire for those which are light and have good texture. As a technology for this desire, it is practiced *inter alia* to add an emulsifier, oil or fat, sugar or the like or to add an emulsion composed of these ingredients.

Under these circumstances, a variety of confectioneries with a tea extract or the like incorporated therein has been proposed to date. It has, however, been difficult to incorporate catechins in a large amount because of the taste inherent to catechins such as astringency. Patent Document 3 discloses an example in which 0.6 weight parts of tea polyphenols are added to 100 weight parts of a cake premix. The resulting cake premix is, however, indicated to lead to significantly-pronounced astringency. Patent Document 3 further discloses a technology that makes an improvement in flavor by using a polyhydric alcohol fatty acid ester and a neutral lipid in combination. However, the combined use of such polyhydric alcohol fatty acid ester and neutral lipid gives a constraint on recipes. There is hence an outstanding desire for a flavor-improving technology having greater applicability.

Further, Patent Document 4 discloses an example in which catechins are added as much as 228 mg in terms of epicatechingallates to 100 g of wheat flour to be used for cookies and also discloses a technology that polyphenols are added as an emulsified polyphenol preparation with a view to reducing astringency, However, this technology is accompanied by a constraint imposed on the form of the preparation to be used, leading to a desire for a flavor-improving technology having greater applicability.
Also disclosed are beverages and foods, which contain tea leaf tannins obtained by using a cation exchange technology and an ethanol precipitation technology in combination. Specifically, it is disclosed that one having light crunchiness can be obtained by adding about 0.6 weight parts of tea leaf tannins to 100 weight parts of wheat flour, but nothing is mentioned about their effects at high concentrations (Patent Document 5). In addition, baked, high-dietary-fiber foods containing from 1 to 5 wt% of catechins as an antioxidant are also disclosed, but there is a room for further improvement, for example, in flavor (Patent Document 6).
[Patent Document 1] JP-A-60-156614
[Patent Document 2] JP-A-03-133928
[Patent Document 3] JP-A-2001-309764
[Patent Document 4] JP-A-2001-316259
[Patent Document 5] JP-A-11-228565
[Patent Document 6] JP-A-2003-250431
JP 2007 001893 A discloses a catechin composition, low in unpleasant bitter taste, with a ratio of the content of non-polymeric catechins to the content of total polyphenols of 0.80-0.97, suitable for use in confectioneries.
US 2003/0096050 A1 discloses a cake comprising catechins in proportion of 0.7 weight parts to 100 weight parts of flour.

### Disclosure of the Invention

Specifically, the present invention provides a confectionery obtained by adding a purified product of catechins-containing plant extract to grain flour such that from 0.7 to 7 weight parts of catechins can be incorporated per 100 weight parts of the grain flour, and then cooking the resulting mixture, wherein a ratio of a content of catechins as measured by high-performance liquid chromatography to a content of tannins as measured by the ferrous tartrate method (hereinafter called "the catechins/tannins weight ratio") in the purified product of catechin-containing plant extract is from 0.81 to 1.10.

### Modes for Carrying out the Invention

When a confectionery is obtained, for example, by adding such a tea extract or the like as mentioned above in a large amount such that the tea extract or the like accounts for 0.7 weight parts or more in terms of catechins per 100 weight parts of grain flour composed primarilyof wheat flour to bring about the physiological effects of catechins, the confectionery is provided with a reduced flavor due to the additional emergence of bitterness, astringency and the like originated from the extract and also, is in a form reduced in bulkiness. A further problem that the thus-obtained confectionery is also low in brightness has also been found to arise.
The present invention, therefore, provides a confectionery which contains physiologically desirous catechins in a large amount of 0.7 weight parts or more in terms of catechins per 100 weight parts of grain flour composed primarily of wheat flour and which is good in texture, brightness and flavor.

The present inventors obtained confectioneries by using various catechins-containing ingredients, and devoted themselves to research on their textures, flavors, etc. As a result, it has been found that, upon production of a confectionery by adding a purified product of catechins-containing plant extract such that from 0.7 to 7 weight parts of catechins can be incorporated per 100 weight parts of grain flour and then conducting cooking, the use of a purified product of catechin-containing plant extract, said purified product having a catechins/tannins weight ratio of from 0.81 to 1.10, makes it possible to provide the confectionery with high brightness, a good feel when melting in the mouth when eating, a palatable and soft texture, and also a good flavor.

The confectionery according to the present invention has advantageous effects that despite the addition of catechins in a large amount, the emergence of bitterness, astringency and puckeriness is limited, the brightness is high, the flavor inherent to the confectionery (for example, butter flavor and egg flavor) is good, no lump of flour is formed in the mouth during eating, the feel when melting in the mouth is good, and the texture is palatable and is as light as required as a confectionery.

A cake according to the present invention can be obtained by using (A) the grain flour as a principal ingredient, adding (B) the purified product of catechins-containing plant extract, an auxiliary ingredient, such that from 0.7 to 7 weight parts of catechins can be incorporated per 100 weight parts of the grain flour (A), and then conducting cooking.

The term "catechins" as used herein means non-polymer catechins, and is a generic term which collectively encompasses non-epicatechins such as catechins, gallocatechins, catechingallates and gallocatechingallates, and also, epi-catechins such as epicatechins, epigallocatechins, epicatechingallates and epigallocatechingallates.
On the other hand, the term "tannins" as used herein includes condensed tannins and hydrolysable tannins in addition to the above-mentioned catechins.

In the present invention, each amount of catechins is a value as measured by high-performance liquid chromatography under the conditions to be described in Examples, and each amount of tannins is a value as measured by the ferrous tartrate method under the conditions to be described in the Examples.

The confectionery according to the present invention is obtained by adding the purified product of catechins-containingplant extract (B) such that from 0.7 to 7 weight parts of catechins can be incorporated per 100 weight parts of the grain flour. From the standpoints of flavor, physiological effects, brightness, volume expansion, texture, antioxidation and the like, the content of the catechins may be preferably 0.8 weight parts or greater, more preferably 1 weight parts or greater, even more preferably 2 weight parts of greater. From the viewpoints of bitterness and astringency, the upper limit of the content of the catechins may be preferably 6 weight parts or less, more preferably 5 weight parts or less, even more preferably 3 weight parts or less. In other words, the content of the chatechins of from 0.8 to 6 weight parts are preferred, with from 1 to 5 weight parts being more preferred and from 2 to 5 weight parts being even more preferred.

In the present invention, a purified product of catechins-containing plant extract having the catechins/tannins weight ratio in said purified product being from 0.81 to 1.10, is used. The use of such a purified product can provide the resulting confectionery with higher brightness, better volume expansion percentage, higher resistance to forming lumps of flour in the mouth, better feel when melting in the mouth, more palatable texture, reduced bitterness, astringency and the like, and better flavor compared with the use of purified products of which the catechins/tannins weight ratios are outside the range of from 0.81 to 1.10.

The catechins/tannins weight ratio of the purified product of catechins-containing plant extract (B) to be incorporated in the confectionery according to the present invention is from 0.81 to 1.10, with from 0.82 to 1.10 being preferred and from 0.85 to 1.10 being more preferred, especially from the standpoints of flavor and color tone. If the catechins/tannins weight ratio is smaller than 0.81, the incorporation of catechins results in the mixing of a great deal of other impurities so that the workability and the quality of the confectionery, especially its flavor are deleteriously affected. Therefore, catechins/tannins weight ratios outside the above-described range are not preferred.

Further, the purified product of catechins-containing plant extract (B) may preferably have a percentage of gallate body of 75 wt% or lower. The term "percentage of gallate body" as used herein indicates the amount of gallate body in whole catechins as expressed in terms of wt%. Each percentage of gallate body can be determined by calculation, because whole catechins include gallate body such as catechingallates, gallocatechingallates, epicatechingallates and epigallocatechingallates and non-gallate body such as catechins, gallocatechins, epicatechins and epigallocatechins as described above. The use of catechins, which contain 75 wt% or less of gallate body, can facilitate the production of a confectionery having high brightness, good volume expansion percentage, good texture and good flavor. The percentage of gallate body may be more preferably from 5 to 70 wt%, more preferably from 10 to 65 wt%, more preferably from 20 to 60 wt%, even more preferably from 20 to 45 wt%, even more preferably from 20 to 40 wt%.

The concentration of catechins in the purified product of catechins-containing plant extract (B) may be preferably 40 wt% or higher, more preferably from 41 to 95 wt%, even more preferably from 45 to 90 wt%, even more preferably from 50 to 85 wt%.

As the purified product of catechins-containing plant extract (B), one having a low caffeine content is preferred from the standpoint of reducing a caffeine-derived flavor in the confectionery. Therefore, its caffeine/catechins ratio (weight ratio) may be preferably 0.20 or smaller, more preferably 0.10 or smaller, even more preferably 0.06 or smaller.

Illustrative of the purified product of catechins-containing plant extract (B) includes purified products of extracts of tea, grapes, apples, soybeans and the like. Among these, preferred is the purified product of green tea extract, which can be obtained, for example, by purifying a green tea extract or a concentrate of green tea extract. The term "a concentrate of green tea extract" as used herein specifically means an aqueous solution of a concentrate of green tea extract, one prepared by adding a green tea extract to the concentrate of green tea extract, powder of a green tea extract, or the like. Accordingly, the term "a concentrate of green tea extract" as used herein means, for example, one increasing concentration of catechins by partially removing water from a solution obtained as a result of extraction from green tea leaves with hot water or a water-soluble organic solvent. It can be in various forms such as a solid, an aqueous solution and a slurry. On the other hand, the term "green tea extract" as used herein means an extract which has not been subjected to concentration or purification processing. Commercial products of such a concentrate of green tea extract include "POLYPHENON" (Mitsui Norin Co., Ltd.), "TEAFURAN (ITO EN, LTD.), "SUNPHENON" (Taiyo Kagaku Co., Ltd.), and the like.

As a method for preparing the purified product of catechins-containing plant extract (B) by purifying such a concentrate of green tea extract, it is possible to mention a method that suspends the concentrate of green tea extract in water or a mixture of water and an organic solvent such as ethanol, removes the resulting precipitate, and then distills off water and/or the organic solvent.
In addition to the above-mentioned precipitate removing processing, there are also (i) a method that adds at least one adsorbent selected from activated carbon, acid clay or activated clay to a green tea extract and conducts treatment; (ii) a method thattreats a green tea extract with tannase; (iii) a method that treats a green tea extract with a synthetic adsorbent; and the like.
The purified product of catechins-containing plant extract (B) can also be one prepared by further purifying a concentrate of an extract obtained by extracting from tea leaves with hot water or a water-soluble organic solvent such as ethanol or one obtained by directly purifying such an extract.

As the form of the purified product of catechins-containing plant extract (B), it can be in any form such as a liquid, slurry or powder. However, the addition of extra water is not preferred from the viewpoint of the viscosity control of a dough, batter or the like for the confectionery, because the dough, batter or the like is often prepared by using only eggs without addition of water or by using water only a little even when water is added. The addition of extra water requires, for example, reducing the content of eggs, and as a result, brings about such a deleterious effect that the inherent contributions of eggs to flavor and texture will be impaired. It is, therefore, preferred to use a purified product of catechins-containing plant extract in a powder form of which the water percentage is lower than 10 wt%.

In the confectionery according to the present invention, the grain flour (A) is used as a principal ingredient, and as auxiliary ingredients, oil or fat (C), sugar (D), yeast, yeast food, water, dairy products, salt, seasonings (sodium glutamate and nucleic acids), preservatives, enriching agents such as vitamins and calcium, proteins, emulsifiers, amino acids, chemical leavening agents, pH adjusters, flavors, colorings, dry fruits such as raisins, nuts, wheat bran, whole wheat flour, chocolate and chocolate products, and the like can be used as desired, in addition to the purified product of catechins-containing plant extract (B).
It is preferred for the confectionery according to the present invention to contain catechins of 0.1 wt% or higher. A catechin content of 0.15 wt% or higher is more preferred, with 0.2 wt% or higher being even more preferred. The inclusion of a great deal of catechins makes it possible to more efficiently bring about the physiological effects of catechins. From the viewpoint of eating quality, the content of catechins may be preferably 3 wt% or lower, more preferably 2 wt% or lower.

As the grain flour (A) for use in the present invention, any grain flour can be added insofar as it is commonly employed in confectioneries. Examples include starches obtained from wheat flour, rice flour, corn, glutinous corn (waxy corn), tapioca and the like; modified starches thereof; and the like. As wheat flour, soft wheat flour is mainly used. The classification of wheat flour is generally defined depending on the content of proteins in wheat flour, and soft wheat flour is specified to have a protein content of from 6.5 to 8%.

As the oil or fat (C), any oil or fat can be added insofar as it is commonly employed in confectioneries. It can be of either animal or plant origin. A wide variety of oils and fats - e.g., those having plasticity such as butter, lard, margarine and shortening, liquid oils, hardened oils (solid fat) obtained by hydrogenating such liquid oils, andtransesterifiedoils-canbeusedeither singly or in combination. From the standpoint of the texture of the confectionery, the amount of the oil or fat (C) may be preferably from 2 to 300 weight parts, more preferably from 5 to 200 weight parts, even more preferably from 10 to 100 weight parts per 100 weight parts of the grain flour. Especially when the confectionery is a cake, the above-described range is preferred from the standpoints of whippability and foam stability at the time of preparation of cake batter and the texture of the resulting cake.

As the sugar (D), any sugar can be added insofar as it is commonly employed in confectioneries. Specific usable examples include monosaccharides such as glucose, fructose and galactose; disaccharides or polysaccharides such as maltose, sucrose, malt sugar, starch syrup, isomerized sugar, inverted sugar, cyclodextrin, branched cyclodextrin, and dextrin: and reducing sugars such as starch hydrolysates. These sugars can be used either singly or in combination. The amount of the sugar (D) in the present invention may be preferably from 50 to 300 weight parts, more preferably from 75 to 250 weight parts, even more preferably from 90 to 200 weight parts per 100 weight parts of the grain flour from the standpoints of workability and flavor.
As other sugars, sugar alcohols such as sorbitol, maltitol and xylitol; and sucralose, aspartame and acesulfame potassium; and the like can also be used.

Protein may preferably be added for nutritional enrichment and texture improvement. Any protein can be used insofar as from the viewpoint of texture improvement, it exhibits viscosity when dissolved in water. Illustrative are milk proteins, animal proteins, plant proteins, and the like. The milk proteins include sodium casein, calcium casein, rennet casein, milk casein, milk whey, lactalbumin, lactoglobulin, and the like. These proteins can be used singly, or two or more proteins selected from them can be used as a mixed system. The amount of protein in the present invention may be preferably from 0.01 to 20 weight parts, more preferably from 0.1 to 15 weight parts, even more preferably from 0.5 to 10 weight parts per 100 weight parts of the grain flour from the standpoints of texture and flavor.

As an emulsifier, any emulsifier can be added insofar as it is commonly employed in confectioneries. Examples include glycerin fatty acid esters, sucrose fatty acid esters, sorbitan fatty acid esters, propylene glycol fatty acid esters, lecithin, lecithin derivatives, and the like. These emulsifiers can be used singly. Preferably, however, two or more emulsifiers selected from them can be used as a mixed system, because the dispersibility of the emulsifiers themselves can be improved, the workability can be improved, and the prevention of aging in texture especially during storage can be achieved. The amount of the emulsifier in the present invention may be preferably from 0.01 to 15 weight parts, more preferably from 0.1 to 10 weight parts, even more preferably from 0.2 to 7 weight parts per 100 weight parts of the grain flour from the standpoints of workability improvement and the prevention of aging during storage.
To more effectively develop the whippability and foam stability by the emulsifier, it is preferred to provide the emulsifier with improved dispersibility. For this reason, the emulsifier may preferably be used in an emulsified form together with sugar, oil or fat, and the like. One obtained by formulating an emulsifier, sugar and oil or fat into an emulsified form is generally called "a whippable preparation" or "a whippable oil or fat", and is used widely. As the composition of such a whippable oil or fat, a whippable oil or fat containing from 5 to 30 wt% of an emulsifier, from 5 to 40 wt% of sugar, from 5 to 30 wt% of oil or fat and from 5 to 40 wt% of water is preferred from the standpoints of whippability and foam stability.

The term "confectionery" as used herein is a generic term for those which are each obtained by adding the above-described auxiliary ingredients and an adequate amount of eggs and/or water to grain flour, such as wheat flour, as a principal ingredient to prepare a dough, a batter or the like and then conducting cooking such as baking. These confectioneries include cakes and baked confectioneries. These cakes include a sponge cake, butter cake, chiffon cake, rolledcake, Swiss roll, bouchees, tree cake, pound cake, cheese cake, steamed cakes, and the like. The present invention can also be applied confectioneries obtainable by subjecting batter to a heating step such as baking, for example, *manju* (baked, filled buns), donuts, pancake, *dora-yaki* (two pieces of pancake with sweet bean jam sandwiched between them), and *imagawa-yaki* (muffin-textured, thick round cake with sweet beam jam filled in it), and the term "cakes" of the present invention also encompasses these confectioneries.

The term "cakes" as used herein also includes perishable cakes of which the use-by dates are generally from 3 to 4 days and semiperishable cakes of which the use-by dates are generally up to from 1 to 6 months.

Production processes of cakes according to the present invention include the "all-in" mix process, the separate mixing process, the simultaneous mixing process, and the like, all of which are extensively practiced. Cooking conditions are determined as desired depending on the kind of each cake.

The term "baked confectionery" as used herein encompasses hard-type baked confectioneries having hard texture, such as crackers and biscuits; soft-type baked confectioneries having soft texture, such as wafers, pretzels, soft biscuits (including cookies), *tarte* using cookie dough for tarte cups, pies, and coatings for half-melon shaped buns, cream puffs and the like (applying cookie dough onto bread dough or puff batter, followed by baking); and biscuits having intermediate texture between the hard type and the soft type, such as general biscuits.

The baked confectionery according to the present invention can be produced by baking a dough, batter or the like of the above-described ingredients. For the preparation of the dough, batter or the like in its production process, a preparation method such as the sugar-batter method or the flour-batter method can be used. It is then possible to use a forming method such as a cutting method (for hard biscuits), a cutting (embossing) method (for soft biscuits), a rotary molding method (for rotary biscuits), a wire-cuttingmethod (for wire-cut biscuits), a root-pressing method (for root-pressed biscuits), a depositing (dropping) method (for deposited (dropped) biscuits) or a hand-making method (for hand-made biscuits) . Its baking conditions are determined as desired depending on the kind of the baked confectionery.

### Examples

### (Measurement method of non-polymer catechins)

Measurement of non-polymer catechins in a catechin preparation was conducted as will be described hereinafter. A high-performance liquid chromatograph (model: "SCL-10AVP") manufactured by Shimadzu Corporation was used. Thechromatograph wasfitted with a liquid chromatograph column packed with octadecyl-introduced silica gel, "L-Column, TM ODS" (4.6 mm in diameter × 250 mm; product of Chemicals Evaluation and Research Institute, Japan). The catechin preparation was diluted with distilled water, and subsequent to filtration through a filter (pore size: 0.8 µm), the resulting sample solution was subjected to chromatography at a column temperature of 35°C by the gradient elution method making use of a solution A and a solution B. The solution A, mobile phase, was a solution containing acetic acid at 0.1 mol/L in distilled water, while the solution B, mobile phase, was a solution containing acetic acid at 0.1 mol/L in acetonitrile. The measurement was conducted under the conditions of 20 µL sample injection volume and 280 nm UV detector wavelength.

### (Measurement method of catechins in confectioneries)

A portion (15 g) of a freeze-dried confectionery was sampled. Using a mixed solution (weight ratio; 8:2) of methanol and 0.5 mg/mL oxalic acid, the portion was subjected to shaking extraction twice with 30 mL of the mixed solution per extraction and then once with 20 mL of the mixed solution. In each extraction processing, the extraction time was 10 minutes. Subsequently, the extraction solution was subjected to centrifugal separation (conditions: 2500 r/min, 5 minutes). After the centrifugal separation, the supernatant was filtered through a cotton plug to obtain a sample solution for analysis. Using the thus-obtained sample solution for analysis, quantification was conducted following the above-described "Measurement method of non-polymer catechins".

### (Measurement method of tannins)

Using ethyl gallate as a standard solution, tannins were measured in terms of an equivalent amount of gallic acid by the ferrous tartrate method (referential publication: "Green Tea Polyphenols", Technology Series for the Effective Utilization of Functional Ingredients for Beverages and Foods, No. 10). A sample (5 mL) was stained with the standard ferrous tartrate solution (5 mL). With a phosphate buffer, the volume of the thus-stained sample was adjusted to 25 mL. Its absorbance was measured at 540 nm, and from a calibration line for ethyl gallate, the content of tannins was determined.
Preparation of the standard ferrous tartrate solution: Ferrous sulfate heptahydrate (100 mg) and potassium sodium tartrate (500 mg) were dissolved with distilled water to 100 mL.
Preparation of the phosphate buffer: 1/15 mol/L solution of disodium hydrogenphosphate and 1/15 mol/L solution of sodium dihydrogenphosphate were mixed to give pH 7.5.

### (Measurement method of caffeine)

The following system was used.
HPLC (manufactured by Hitachi, Ltd.) was used. Plotter: "D-2500", Detector: L-4200",
Pump: L-7100", Autosampler: "L-7200", Column: "Inertsil ODS-2" (2.1 mm inner diameter × 250 mm length).

The following analytical conditions were used. sample injection volume: 10 µL
Flow rate: 1.0 mL/min
Detection wavelength of UV absorption spectrometer: 280 nm
Eluent A: 0.1 M solution of acetic acid in water
Eluent B: 0.1 M solution of acetic acid in acetonitrile Concentration gradient conditions (vol%)

| Time | Eluent A | Eluent B |
|---|---|---|
| 0 min | 97 | 3 |
| 5 min | 97 | 3 |
| 37 min | 80 | 20 |
| 43 min | 80 | 20 |
| 43.5 min | 0 | 100 |
| 48.5 min | 0 | 100 |
| 49 min | 97 | 3 |
| 62 min | 97 | 3 |

The retention time of caffeine was 27.2 minutes.
From each area % determined here, the corresponding wt.% was determined based on the standard substance.

### (Measurement method of the water percentage of catechin preparation)

A portion (2 to 3 g) of a catechin preparation was weighed, and was then placed for 2 hours in a constant-temperature chamber set at 105°C. Using, as its water content, a difference in weight before and after the drying, the water content was divided by the weight of the portion of the catechin preparation before the drying. The percentage of the quotient was used as the water percentage of the catechin preparation.

### Production Examples

(Green tea extract: "POLYPHENON HG")
   The concentration of non-polymer catechins in the solid contents was 33.7 wt%.
   The percentage of gallate body was 51 wt%.
   The non-polymer catechins/tannins weight ratio was 0.69.

(Catechin preparation (i) - "POL-JK", product of Mitsui Norin Co., Ltd.)
The concentration of non-polymer catechins in the solid contents was 30.6 wt%.
The percentage of gallate body was 50 wt%.
The non-polymer catechins/tannins weight ratio was 0.80.
The water percentage of the catechin preparation (i) was 6.8 wt%.

(Catechin preparation (ii) - "SUNPHENON 100S", product of Taiyo Kagaku Co., Ltd.)
The concentration of non-polymer catechins in the solid contents was 74.8 wt%.
The percentage of gallate body was 75.7 wt%.
The non-polymer catechins/tannins weight ratio was 0.77.

### (Production of catechin preparation (iii))

A green tea extract ("POLYPHENON HG", product of Tokyo Food Techno Co., Ltd.; 200g) was dispersed in a 68 wt% aqueous solution of ethanol (800 g) at ambient temperatures under the stirring conditions of 250 r/min, and after addition of acid clay ("MIZUKA ACE #600", product of Mizusawa Chemical Industries, Ltd.; 35 g), stirring was continued for approx. 10 minutes. Subsequently, the resulting mixture was filtered through No. 2 filter paper. Activated carbon (20 g) was then added to the filtrate, and the thus-obtained mixture was filtered again through No. 2 filter paper. Re-filtration was next conducted through a membrane filter of 0.2 µm pore size. Deionized water (200 g) was added to the filtrate, the ethanol was distilled off at 40°C and 0.0272 kg/cm², and with deionized water, the concentration of catechins was adjusted to obtain a green tea extract. The green tea extract was then freeze-dried to afford a powdery catechin preparation (iii).
The concentration of non-polymer catechins in the solid contents in the catechin preparation (iii) was 42.3 wt%.
The non-polymer catechins/tannins weight ratio of the catechin preparation (iii) was 0.81.
The percentage of gallate body in the catechin preparation (iii) was 51 wt%.
The water percentage of the catechin preparation (iii) was 5.4 wt%.

### (Production of catechin preparation (iv))

A green tea extract ("POLYPHENON HG", product of Tokyo Food Techno Co., Ltd.; 200g) was dispersed in a 95 wt% aqueous solution of ethanol (800 g) at ambient temperatures under the stirring conditions of 250 r/min, and after addition of acid clay ("MIZUKA ACE #600", product of Mizusawa Chemical Industries, Ltd.; 100 g), stirring was continued for approx. 10 minutes. Subsequently, the resulting mixture was filtered through No. 2 filter paper. Activated carbon (20 g) was then added to the filtrate, and the thus-obtained mixture was filtered again through No. 2 filter paper. Re-filtration was next conducted through a membrane filter of 0.2 µm pore size. Deionized water (200 g) was added to the filtrate, the ethanol was distilled off at 40°C and 0.0272 kg/cm², and with deionized water, the concentration of catechins was adjusted to obtain a green tea extract. The green tea extract was then freeze-dried to afford a powdery catechin preparation (iv).
The concentration of non-polymer catechins in the solid contents in the catechin preparation (iv) was 62.5 wt%.
The non-polymer catechins/tannins weight ratio of the catechin preparation (iv) was 0.94.
The percentage of gallate body in the catechin preparation (iv) was 51 wt%.
The water percentage of the catechin preparation (iv) was 3.2 wt%.

### (Production of catechin preparation (v))

Hot water of 88°C (45 kg) was added to green tea leaves (produce of Kenya, large leaf variety; 3 kg). After batchwise extraction for 60 minutes under stirring, coarse filtration was conducted through a 100-mesh screen. To remove fine powder from the extract, a centrifugal separation operation was performed to obtain a "green tea extract" (36.8 kg, pH 5.3) (the concentration of non-polymer catechins in the green tea extract = 0.88 wt%, the percentage of gallate body in the green tea extract = 51.6 wt%, caffeine: 0.17 wt%). A portion of the green tea extract was freeze-dried to afford a catechin preparation (v). The concentration of non-polymer catechins in the solid contents in the catechin preparation (v) = 32.8 wt%, the percentage of gallate body in the catechin preparation (v) = 51.6 wt% , and the caffeine/catechins ratio of the catechin preparation (v) = 0.193.

### (Production of catechin preparation (vi))

Hot water of 88°C (45 kg) was added to green tea leaves (produce of Kenya, large leaf variety; 3 kg) - After batchwise extraction for 60 minutes under stirring, coarse filtration was conducted through a 100-mesh screen. To remove fine powder from the extract, a centrifugal separation operation was then performed to obtain a "green tea extract" (36.8kg, pH 5.3) (the concentration of non-polymer catechins in the green tea extract = 0.88 wt%, the percentage of gallate body in the green tea extract = 51.6 wt%, caffeine: 0.17 wt%). The green tea extract was kept at the temperature of 15°C, and tannase ("TANNASE KTFH", product of Kikkoman Corporation; 500 U/g) was then added to the green tea extract to give a concentration of 430 ppm. The solution was kept for 55 minutes. The solution was then heated to 90°C, at which the solution was kept for 2 minutes to inactivate the enzyme so that the reaction was terminated (pH 5.2). Under the conditions of 70°C and 6.7 kpa, concentration processing was performed to a Brix concentration of 20% by reduced-pressure concentration. Further, the concentrate was spray-dried to afford a powdery, tannase-treated catechin preparation (vi) (1.0 kg). The content of non-polymer catechins in the solid contents in the catechin preparation (vi) = 30.5 wt%, the percentage of gallate body in the catechin preparation (vi) = 31.6 wt%, and the caffeine/catechins ratio of the catechin preparation (vi) = 0.183.

### (Production of catechin preparation (vii))

Acid clay ("MIZUKA ACE #600", product of Mizusawa Chemical Industries, Ltd.; 100 g) was dispersed in a 92 wt.% aqueous solution of ethanol (800 g) at ambient temperatures under the stirring conditions of 250 r/min. After stirring was conducted for approx. 10 minutes, a mixture of the catechin preparation (v) (120 g) and the catechin preparation (vi) (80 g) was added, and still at room temperature, stirring was continued for approx. 3 hours (pH 4.1). Subsequently, the formed precipitate and the acid clay were filteredoff by No. 2 filter paper. Deionized water (417 g) was added to the thus-obtained filtrate, and stirring was conducted at 15°C for approx. 5 minutes under the stirring conditions of 100 r/min. From the mixture, the precipitated turbid components were separated at the operation temperature of 15°C (6,000 rpm, 5 minutes) by using a refrigerated compact centrifuge (manufactured by Hitachi Koki Co., Ltd.). The separated solution was brought into contact with activated carbon ("KURARAY COAL GLC", product of Kuraray Chemical Co., Ltd.; 30 g), and without a break, was filteredthrougha 0.2-µm membrane filter. The filtrate was freeze-dried to afford a catechin preparation (vii).
In the solid contents in the catechin preparation (vii), the content of non-polymer catechins = 59.5 wt%, the percentage of gallate body = 44.1 wt%, the catechins/tannins ratio = 0.928, and the water percentage = 4.6 wt%.

### (Production of catechin preparation (viii))

The catechin preparation (vi) (85 g) was dissolved under stirring at 25°C in deionized water (8,415 g) in the course of 30 minutes (tannase-treated solution). A synthetic adsorbent "SP-70" (product of Mitsubishi Chemical Corporation; 2,048 mL) was packed in a stainless steel column 1 (110 mm inner diameter × 230 mm height, volume: 2,185 mL). The tannase-treated solution (8,200 g, 4 volumes relative to the synthetic adsorbent) was allowed to pass at SV = 1 (h⁻¹) through the column 1, and the outflow was discarded. The column 1 was then washed at SV = 1 (h⁻¹) with water (2,048 mL, one volume relative to the synthetic adsorbent). Subsequent to washing with water, a 50 wt% aqueous solution of ethanol (4,096 mL, 2 volumes relative to the synthetic adsorbent) was allowed to pass at SV = 1 (h⁻¹) to afford a "resin-treated product 1" (4,014 g, pH 4.58). Non-polymer catechins were contained at 1.89 wt% in the extract, and the percentage of gallate body in the non-polymer catechins composition was 36.2 wt%. Further, the content of caffeine was 0.281 wt%. The content of non-polymer catechins in the solid contents in the tea extract was 60.1 wt%. Granular activated carbon "TAIKO SGP" (product of Futamura Chemical Co., Ltd.; 8.5 g) was then packed in a stainless steel column 2 (22 mm inner diameter × 145 mm height, volume: 55.1 mL). The "resin-treated product 1" (1,000 g) was allowed to pass at SV = 1 (h⁻¹) through the column 2 (the amount of the activated carbon was 0.4 times relative to the amount of the tannase-treated green tea extract) . The outflow was then freeze-dried to afford a catechin preparation (viii). In the solid contents in the catechin preparation (viii), the content of non-polymer catechins = 77.6 wt%, the percentage of gallate body = 26.1 wt%, catechins/tannins ratio = 1.072, and the water percentage = 3.7 wt%.

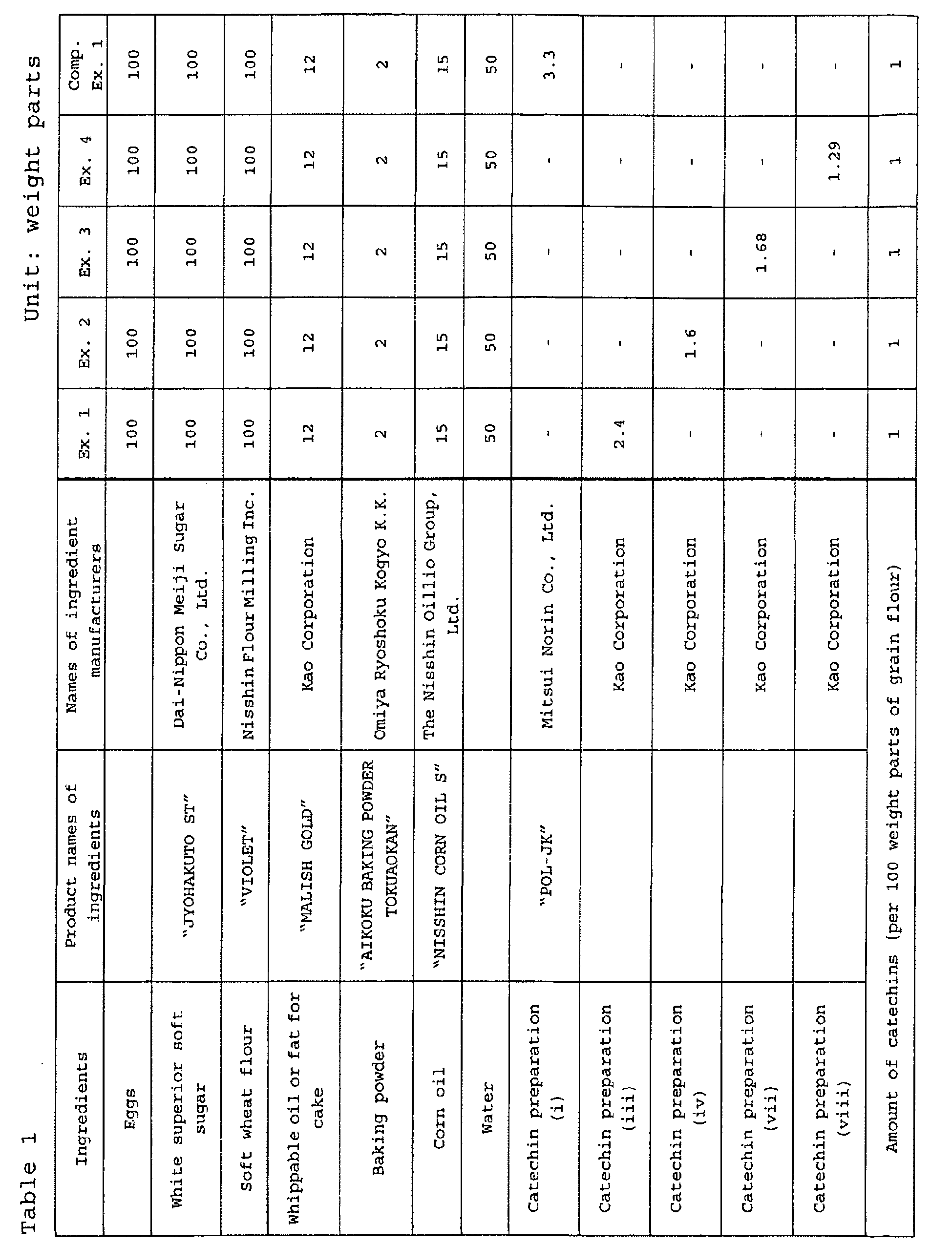

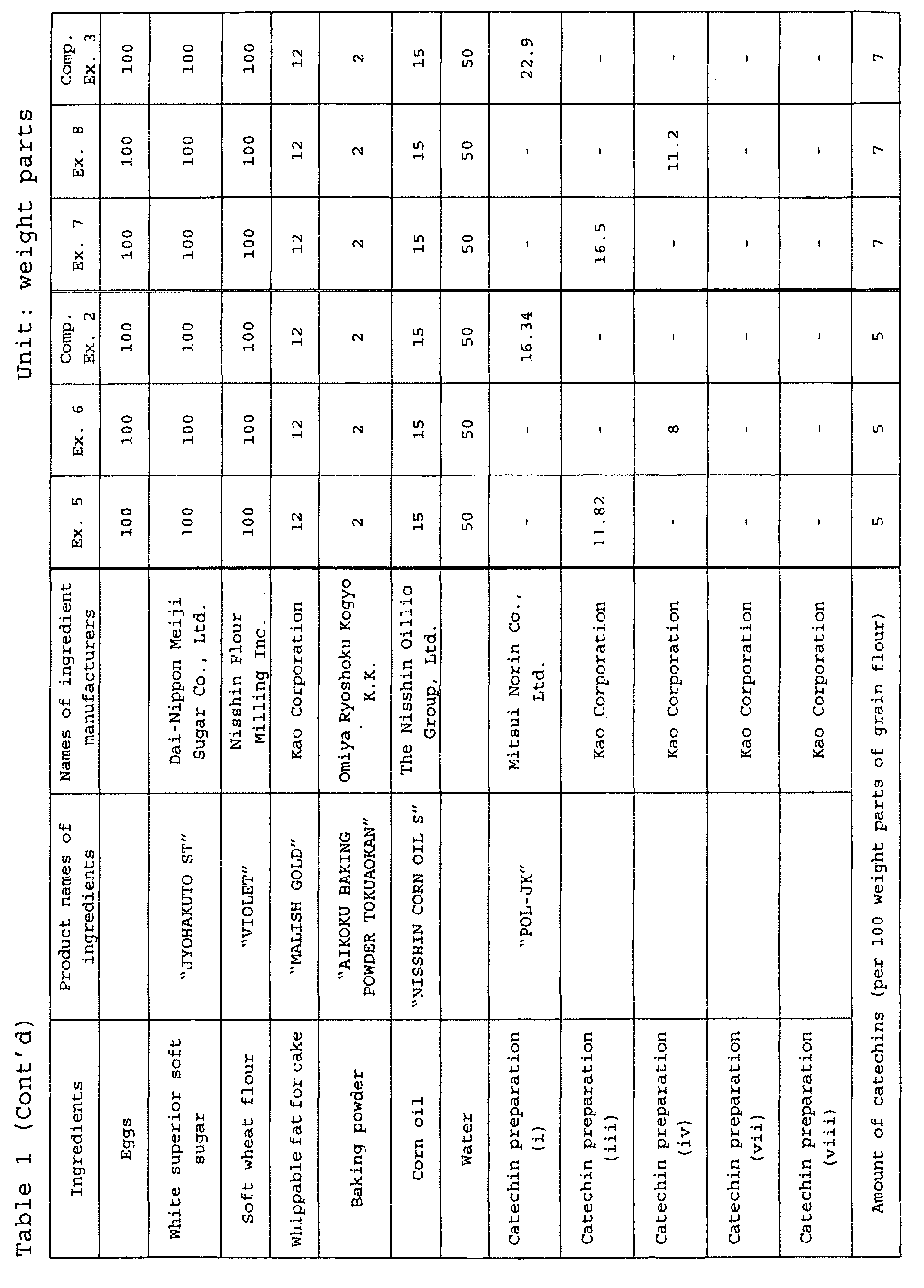

### Examples 1-8 & Comparative Examples 1-3

### <Making of cakes>

Using the ingredients described in Table 1 in the amounts also described in Table 1, cakes of Examples 1-8 and Comparative Examples 1-3 were made by the following procedures.
1) "MALISH GOLD", eggs, corn oil and water were weighed in a mixer ("KANTO MIXER MODEL: CS-10", manufactured by Kanto Kongoki Industrial Co., Ltd.). Using a whipper, those ingredients were mixed at high speed for 10 seconds to beat the eggs.
2) To the mixture of step 1), weighed white superior soft sugar and catechin preparation were added, followed by mixing at low speed for 30 seconds and then, at medium speed for 2 minutes.
3) To the mixture of step 2), soft wheat flour and baking powder were added, followed by mixing at low speed for 30 seconds and then, at high speed until a target specific gravity of batter (0.50) was reached.

4) A sheet of paper was placed on a cake pan (size: No. 6). The batter (300 g) was poured onto the paper sheet, followed by baking at 180°C for 40 minutes in an oven to make a cake.
5) The baked cake was taken out of the pan. After cooled at room temperature for 20 minutes on a rack, the cake was placed in a plastic box. With a plastic bag being applied over the plastic box, the cake was stored at 20°C for 1 day.
   With respect to the batter and cake, the below-itemized measurements and assessments were conducted. The results are presented in Table 2. It is to be noted that in the cake obtained in Example 2, the content of catechins and the percentage of gallate body were 0.21 wt% and 46 wt%, respectively.

### [Viscosity measurement conditions]

"VISCOMETER TV-10" (manufactured by Toki Sangyo Co., Ltd.) was employed. Using FOUR-SPINDLE SET: SPINDLE No. M4 and CORD No. 23, each viscosity was measured at 25°C under the condition of 1.5 rpm test speed.

### <Assessment methods>

### (1) Measurement of color difference

To make an assessment of the color of a central cut surface of each experimentally-baked cake, the color difference was measured using a spectral colorimeter ("SPECTRO COLOR METER SE2000", manufactured by Nippon Denshoku Industries Co. , Ltd.).

### (2) Measurement of volume

Using a laser volume measurement system "WIN VM200" (manufactured by ASTEX Research & Development Co., Ltd.), the volume of each cake of which the weight had been measured beforehand was measured. The specific volume of the cake was calculated by dividing the thus-determined volume with the weight. The measurement mode was set at the 2CCD precision measurement.

### (3) Measurement of compression stress

In the direction of thickness, each cake (size: No. 6) was sliced in a thickness of 10 mm, and was then sliced in a thickness of 20 mm to provide a sample.

From the cake slice, a piece of 20 mm thickness × 30 mm length × 30 mm width was cut out to provide a measurement sample.

With respect to the sample, the stress upon 50% compression in the direction of the thickness was measured by using a texture analyzer "EZTest" (manufactured by Shimadzu Corporation).

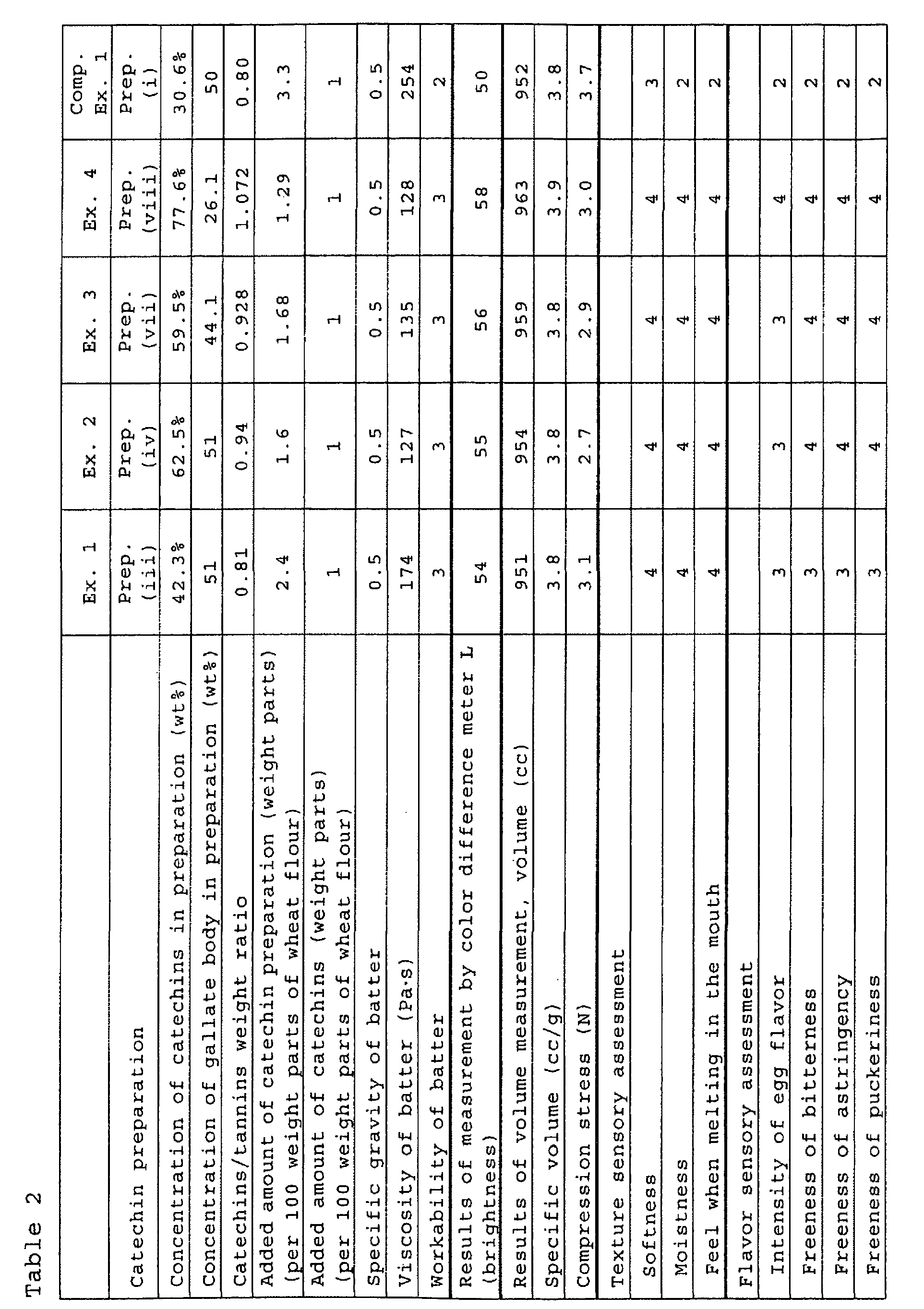

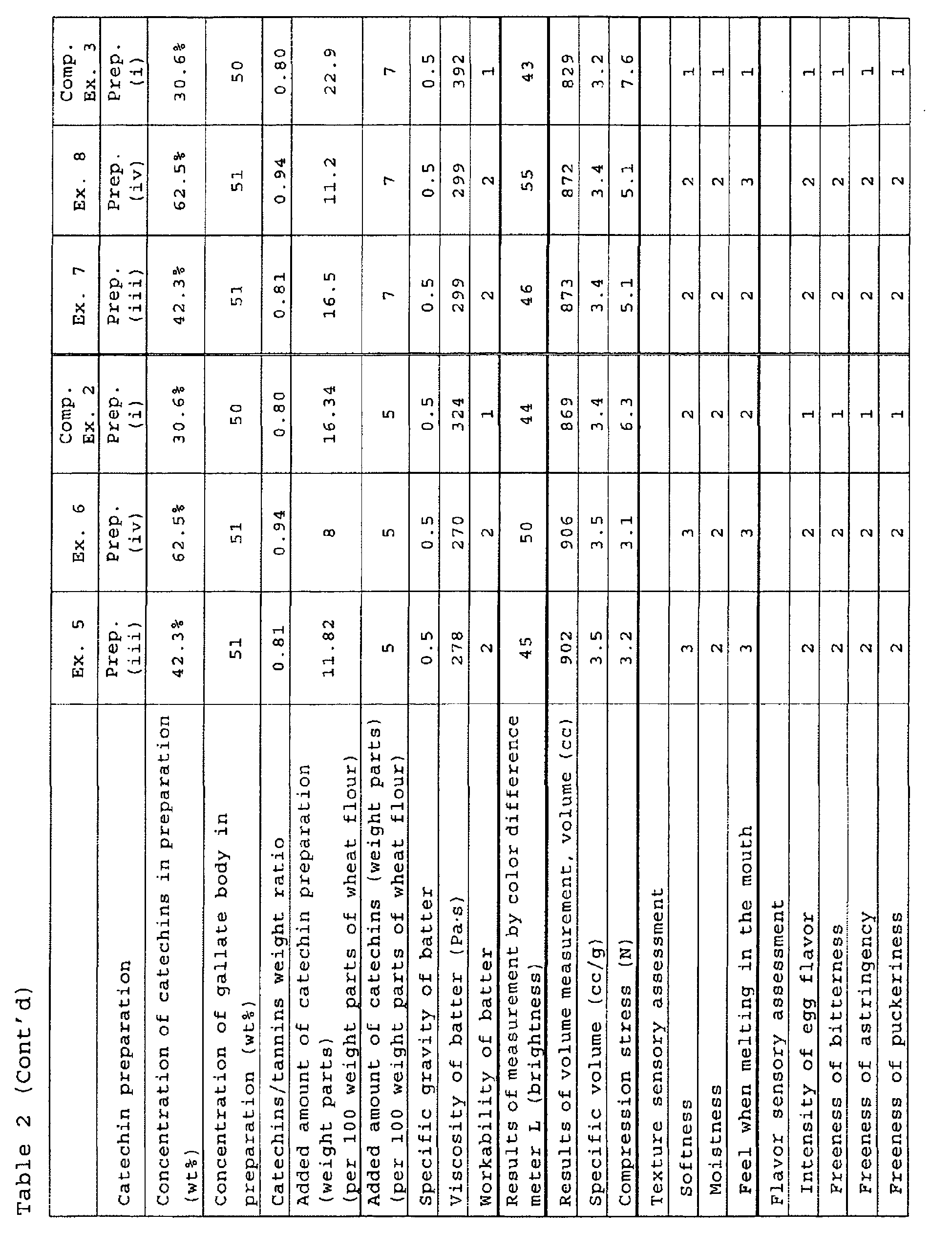

### <Workability of batter>

An assessment was performed concerning the readiness of work upon pouring each prepared batter into the pan.
3 : Batter has fluidity, and can be readily poured into a pan.
2: Batter is high in viscosity and low in fluidity, and cannot be readily poured into a pan.
1: Batter has very high viscosity and no fluidity, and therefore, cannot be poured into a pan.

### <Sensory assessments of texture and flavor >

4: Like cakes not added with catechins, the texture and flavor involve practically no problem and are good.
3: Compared with cakes not added with catechins, the texture and flavor are slightly inferior but are still of good level.
2: Compared with cakes not added with catechins, the texture and flavor are inferior but are still of edible level.
1: Compared with cakes not added with catechins, the texture and flavor are very inferior and are of inedible level.

As is evident from Table 2, the batters with the catechin preparation (iii), (iv), (vii) or (viii) added therein were each smaller in viscosity increase and better in the readiness of pouring into the cake pan compared with those containing the comparative catechin preparation (the catechin preparation (i)) added therein such that the amount of catechins added became the same.
Further, the cakes obtained from the cake batters with the catechin preparation (iii), (iv), (vii) or (viii) added therein were each confirmed to have a crumb maintained in its inherent bright color and also to have an improved volume. In physical properties, they were free from such a hardness increase as those observed on the cakes obtained from the cake batters with the catechin preparation (i) added therein, and as a result, were improved in softness. Concerning the texture, it was also confirmed that the tendency of becoming lumpy in the mouth and making it difficult to swallow was reduced and the feel when melting in the mouth was improved.
Furthermore, the egg flavor, a flavor inherent to cake, was retained.
As to the flavor inherent to catechins, the cakes obtained from the cake batters with the catechin preparation (iii), (iv), (vii) or (viii) added therein were less in the development of bitterness, astringency and puckeriness and were preferred in flavor compared with the cakes obtained from the cake batters with the catechin preparation (i) added therein.

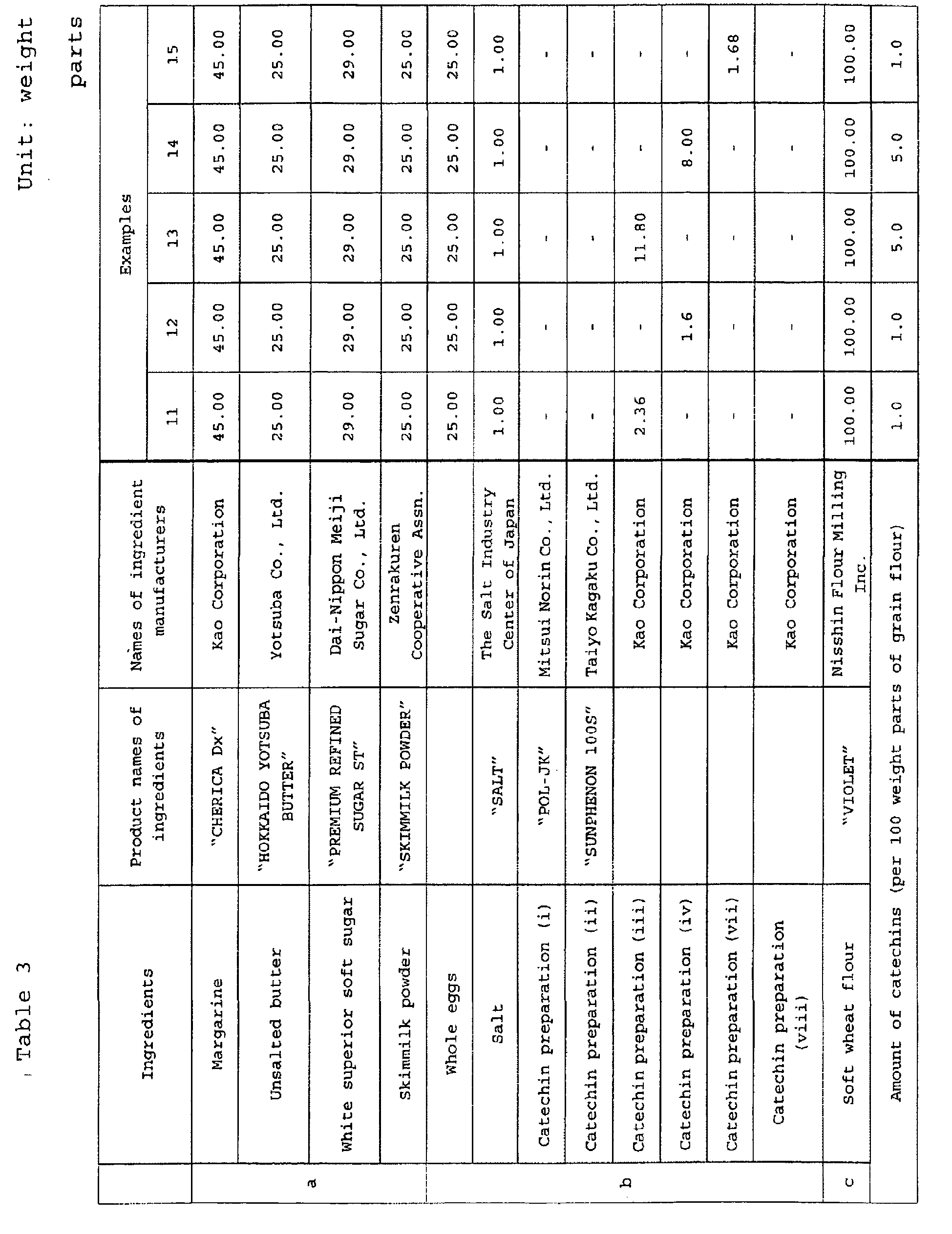

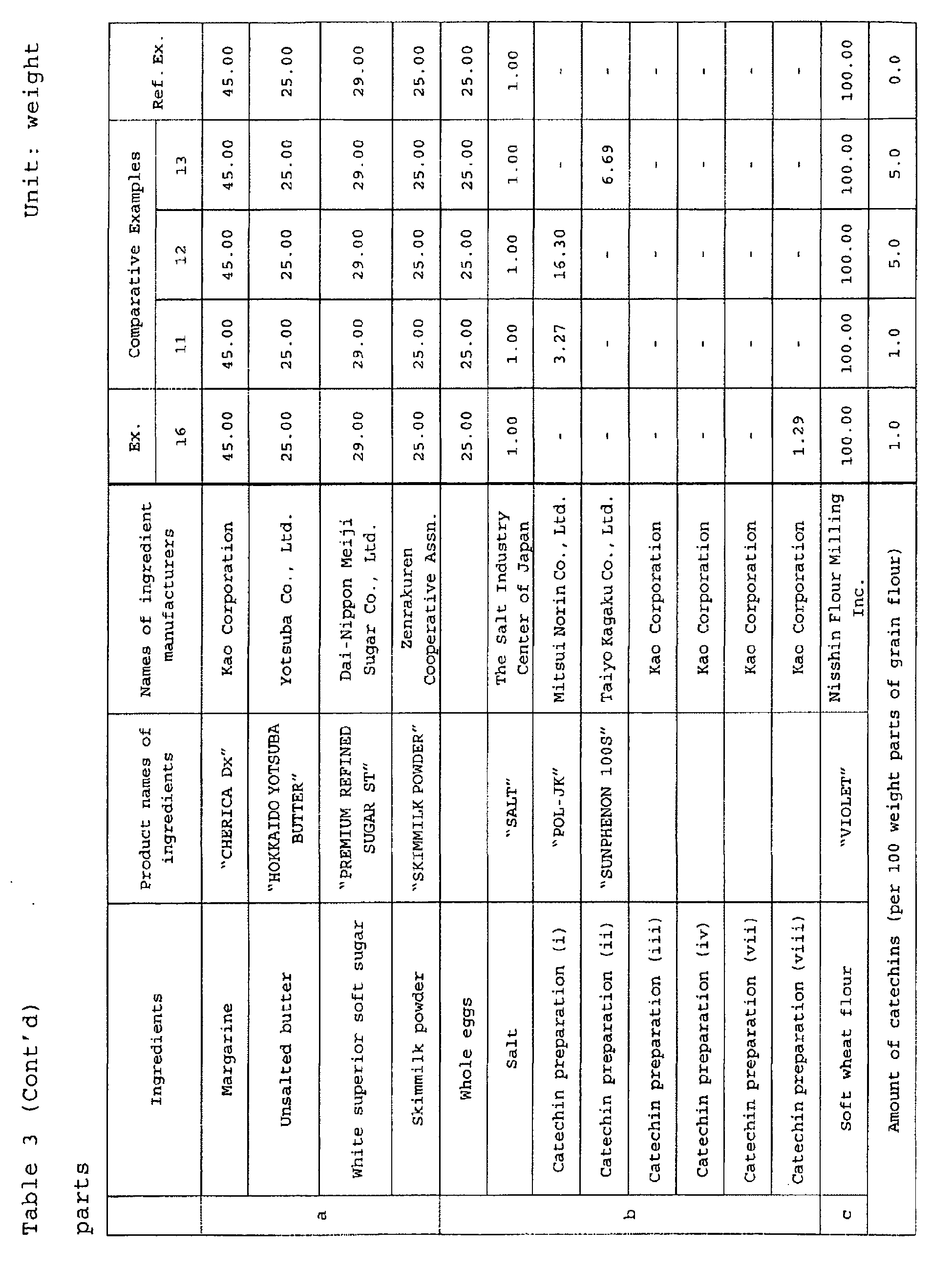

### Examples 11-16 & Comparative Examples 11-13

### <Making of baked confectioneries>

Using the ingredients described in Table 3 in the amounts also described in Table 3, baked confectioneries of Examples 11-16 and Comparative Examples 11-13 were made by the following procedure.
1) The ingredients a (margarine, unsalted butter, white superior soft sugar and skim milk powder) were weighed and then placed in a mixer ("N50 MIXER" (5 quart mixer), manufactured by Hobert Food Equipment Pty Ltd.). By using a beater, the ingredients were mixed at low speed for 30 seconds and then at medium speed to prepare a creamed mixture having a mixing gravity of 0.90.
2) While mixing the creamed mixture of step 1) at low speed over 30 seconds, beaten eggs were added in three portions. The first addition of the eggs was followed by mixing at low speed for 30 seconds. At the time of the second addition, salt was added as dissolved in an egg-water mixture, and at the same time, the catechin preparation was added directly into the mixer. Mixing was then conducted at low speed for 30 seconds.
   After completion of the foregoing, the oil or fat adhered on the mixer wall was scraped off. The last portion of eggs was added, and subsequent to mixing at low speed for 30 seconds, further mixing was conducted at medium speed until a homogeneous cream form (mixing time at medium speed: 2 minutes).
3) Soft wheat flour was added to the creamy mixture of step 2), followed by mixing at low speed for 45 seconds.
4) Portions (20 g each) of the mixture of step 3) were weighed, and were filled in rectangular baking molds of 72 mm length × 22 mm width × 14 mm height. The baking molds were arrayed on a baking tray on which a sheet of release paper had been placed. Through the surface of the dough filled in each baking mold, six holes were formed with a wooden pick. Per baking tray, such baking molds were arranged in three rows, 4 baking molds per row, so that 12 baking molds were arrayed in total.
5) Two baking trays were placed under the above-described baking tray, and an aluminum foil was applied over the baking molds.
6) Baking was conducted at 160°C in an oven. After baked for 20 minutes while being covered by the aluminum foil, the aluminum foil was removed. Baking was then continued further for 18 minutes to make baked confectioneries.
7) After cooling the baked confectioneries at room temperature for 20 minutes on a rack, they were placed in a zipper polyethylene bag, were allowed to stand overnight in a constant-temperature chamber controlled at 20°C, and were then measured for physical properties. The results are presented in Table 4. It is to be noted that in the baked confectionery obtained in Example 12, the content of catechins and the percentage of gallate body were 0.38 wt% and 46 wt%, respectively.

### <Assessment methods>

### (1) Measurement of color difference

To make an assessment of the color of the surface (top surface) of each experimentally-baked confectionery, the color difference was measured using a spectral colorimeter ("SPECTRO COLOR METER SE2000", manufactured by Nippon Denshoku Industries Co. , Ltd.)

### (2) Measurement of volume

Using a laser volume measurement system "WIN VM200" (manufactured by ASTEX Research & Development Co. , Ltd.), the volume of each baked confectionery was measured. The measurement mode was set at the 2CCD precision measurement.

### (3) Maximum stress upon needle penetration

Measurement of the penetration strength of each baked confectionery was conducted using a texture analyzer "EZTest" manufactured by Shimadzu Corporation. Described specifically, the measurement was conducted in the cutting test mode of a measuring software "SHIKIBU RHEOMETER".
The measurement sample (baked confectionery) was placed on a cylindrical cookie cutter of 50 mm diameter × 45 mm height. Upon penetration of a needle-shaped jig of 5 mm diameter through the sample at a speed of 300 mm/min, the maximum stress was measured.

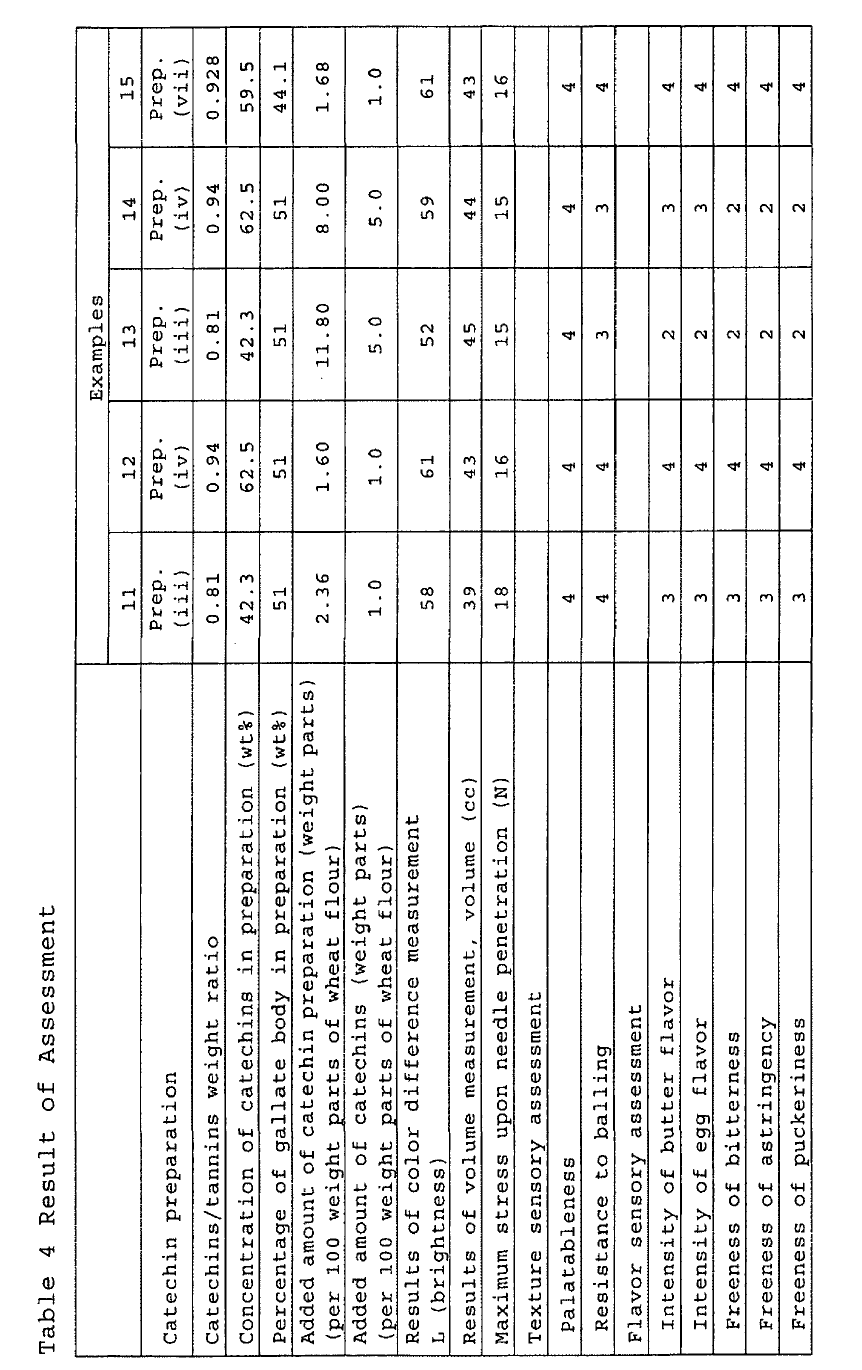

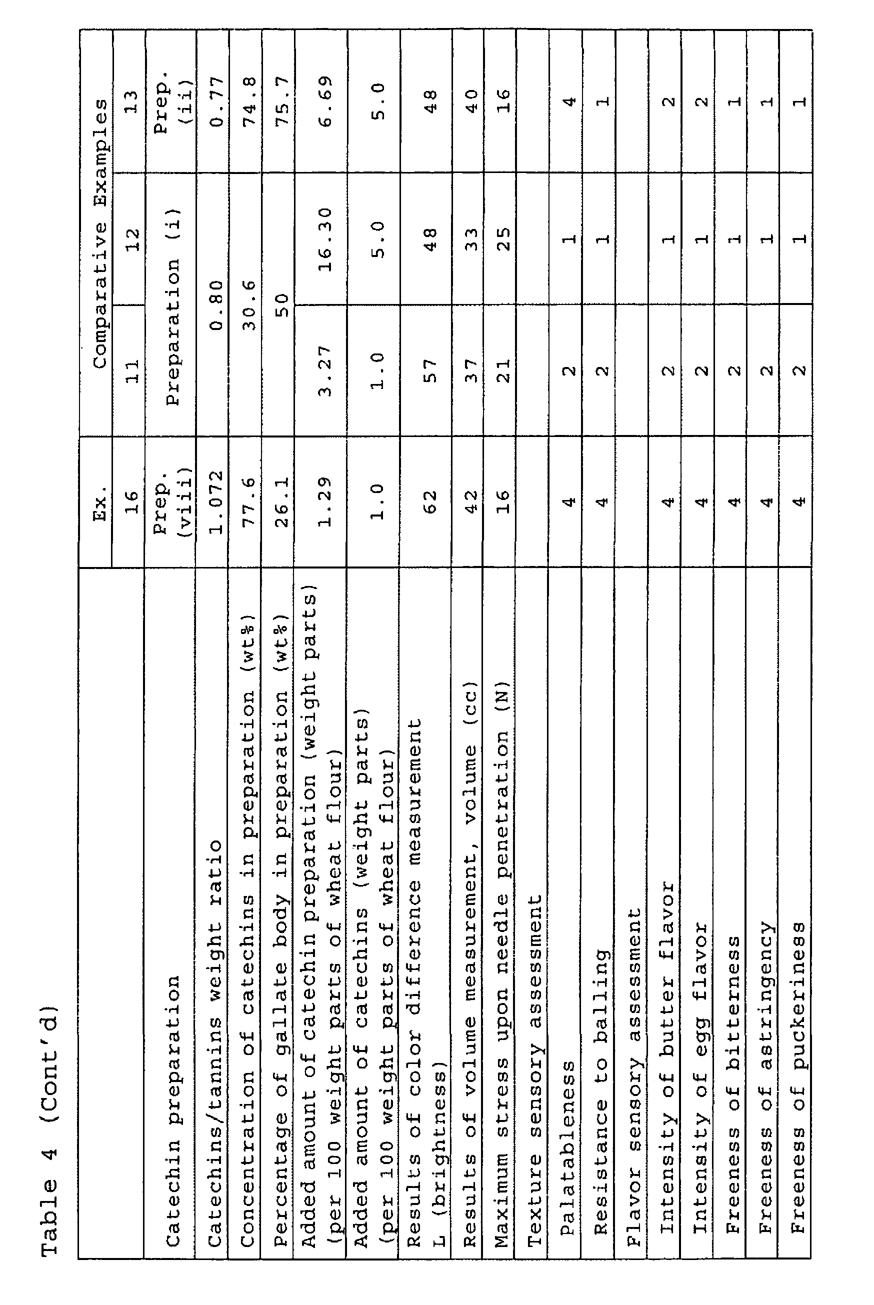

### <Sensory assessments of texture and flavor>

4: Like baked confectioneries not added with catechins, the texture and flavor involve practically no problem and are good.
3: Compared with baked confectioneries not added with catechins, the texture and flavor are slightly inferior but are still of good level.
2: Compared with baked confectioneries not added with catechins, the texture and flavor are inferior but are still of edible level.
1: Compared with baked confectioneries not added with catechins, the texture and flavor are very inferior and are of inedible level.

As is evident from Table 4, the baked confectioneries with the catechin preparation (iii), (iv), (vii) or (viii) sufficiently retained the butter flavor and egg flavor inherent to baked confectioneries compared with those added with the comparative catechin preparation (the catechin preparation (i) or (ii)) such that the amount of catechins added became the same.
Further, the baked confectioneries added with the catechin preparation (iii), (iv), (vii) or (viii) were each confirmed to retain its inherent bright color and also to have an improved volume.
In particular, the volume improving effect was higher in the examples in which the catechin preparation (iii), (iv), (vii) or (viii) was added, evenwhencompared with that in the control examples in which no catechine preparation was used. The baked confectioneries with the content of catechins of 5% showed remarkably this effect.
In physical properties, they were free from such a hardness increase as those observed on the baked confectioneries added with the comparative catechin preparation (the catechin preparation (i) or (ii)), and as a result, were improved in palatableness. Concerning the texture, it was also confirmed that the tendency of becoming lumpy in the mouth and making it difficult to swallow was reduced and the resistance to forming lumps of flour was improved.
As to the flavor inherent to catechins, the baked confectioneries added with the catechin preparation (iii), (iv), (vii) or (viii) were less in the emergence of bitterness, astringency and puckeriness and were preferred in flavor compared with the baked confectioneries added with the comparative catechin preparation (the catechin preparation (i) or (ii)).

## Claims

1. A confectionery obtained by
adding a purified product of catechins-containing plant extract to grain flour such that from 0.7 to 7 weight parts of catechins is incorporated per 100 weight parts of the grain flour;
and cooking the resulting mixture,
wherein a ratio of a content of catechins as measured by high-performance liquid chromatography to a content of tannins as measured by the ferrous tartrate method in the purified product of the catechins-containing plant extract is from 0.81 to 1.10.

2. The confectionery according to claim 1, wherein a content of the catechins in solid contents in the confectionery is from 0.1 to 3 wt%.

3. The confectionery according to claim 1 or 2,
wherein the purified product of the catechins-containing plant extract is a purified product of green tea extract.

4. The confectionery according to any one of claims 1 to 3, which is obtainable by adding the purified product of catechins-containing plant extract in a powder form having a water percentage of lower than 10 wt%.

5. The confectionery according to any one of claims 1 to 4, which is selected from the group consisting of a sponge cake, butter cake, chiffon cake, rolled cake, Swiss roll, bouchees, tree cake, pound cake, cheese cake and steamed cake.

6. The confectionery according to any one of claims 1 to 4, which is selected from the group consisting of cookies, biscuits, calorie bars and crackers.

## Patentansprüche

1. Konditorware, erhalten durch Zugabe eines gereinigten Produktes aus katechinhaltigem Pflanzenextrakt zu Getreidemehl, so dass von 0,7 bis 7 Gew.-Teilen Katechinen pro 100 Gew.-Teilen des Getreidemehls eingefügt sind;
und Kochen der resultierenden Mischung,
worin ein Verhältnis eines Gehaltes von Katechinen, gemessen durch Hochdruckflüssigchromatographie, zu einem Gehalt von Tanninen, gemessen durch das Ferrotartatverfahren, im gereinigten Produkt des katechinhaltigen Pflanzenextraktes von 0,81 bis 1,10 ist.

2. Konditorware nach Anspruch 1, worin der Gehalt der Katechine im Feststoffgehalt der Konditorwaren von 0,1 bis 3 Gew.-% ist.

3. Konditorware nach Anspruch 1 oder 2, worin das gereinigte Produkt des katechinhaltigen Pflanzenextraktes ein gereinigtes Produkt aus Grünteeextrakt ist.

4. Konditorware nach einem der Ansprüche 1 bis 3, erhältlich durch Zugabe des gereinigten Produktes eines katechinhaltigen Pflanzenextraktes in Pulverform mit einem Wasserprozentsatz von weniger als 10 Gew-%.

5. Konditorware nach einem der Ansprüche 1 bis 4, ausgewählt aus der Gruppe bestehend aus Biskuit, Buttercremetorte, Chiffonkuchen, Biskuitrolle, Schweizerrolle, Pastete, Baumkuchen, Früchtekuchen, Käsekuchen und Dampfkuchen.

6. Konditorware nach einem der Ansprüche 1 bis 4, ausgewählt aus der Gruppe bestehend aus Cookies, Biskuits, Kalorienbars und Kräckern.

## Revendications

1. Confiserie obtenue en
ajoutant un produit purifié d'extrait de plante contenant des catéchines à de la farine de grains de telle sorte que 0,7 à 7 parties en poids de catéchines sont incorporées pour 100 parties en poids de la farine de grains ;
et en cuisant le mélange résultant,
où un rapport entre une teneur en catéchines telle que mesurée par chromatographie liquide haute performance et une teneur de tannin telle que mesurée par la méthode de tartrate ferreux dans le produit purifié de l'extrait de plante contenant des catéchines vaut de 0,81 à 1,10.

2. Confiserie selon la revendication 1, dans laquelle une teneur en catéchines en matière sèche dans la confiserie vaut de 0,1 à 3 % en poids.

3. Confiserie selon la revendication 1 ou 2, dans laquelle le produit purifié de l'extrait de plante contenant des catéchines est un produit purifié d'extrait de thé vert.

4. Confiserie selon l'une quelconque des revendications 1 à 3, qui peut être obtenu en ajoutant le produit purifié d'extrait de plante contenant des catéchines sous forme de poudre ayant un pourcentage en eau inférieur à 10 % en poids.

5. Confiserie selon l'une quelconque des revendications 1 à 4, qui est choisie dans le groupe consistant en un gâteau éponge, un gâteau au beurre, un gâteau mousseline, un gâteau roulé, un rouleau suisse, des bouchées, un gâteau à la broche, un quatre-quarts, un gâteau au fromage et un gâteau à la vapeur.

6. Confiserie selon l'une quelconque des revendications 1 à 4, qui est choisie dans le groupe consistant en les cookies, les biscuits, les barres énergétiques et les crackers.
